# EUROPEAN PATENT SPECIFICATION

(11) **EP 0 604 123 B1**
(45) Date of publication and mention of the grant of the patent: **02.06.1999**
(21) Application number: 93310178.4
(22) Date of filing: 16.12.1993
(51) Int. Cl.: G11B 20/10, G11B 20/12

(54) **Digital recording apparatus**
Digitales Aufzeichnungsgerät
Appareil d'enregistrement numérique

(30) Priority: 22.12.1992 JP 341926/92
(43) Date of publication of application: 29.06.1994
(73) Proprietor: MATSUSHITA ELECTRIC INDUSTRIAL CO., LTD., Kadoma-shi, Osaka-fu, 571 (JP)
(72) Inventor: Ohta, Haruo, Hirakata-shi, Osaka-fu 573 (JP); Hiroaki, Shimazaki, Neyaga-shi, Osaka-fu 572 (JP)
(74) Representative: Crawford, Andrew Birkby

(56) References cited:
- EP-A- 0 337 702
- GB-A- 2 107 557
- AUTOMATIC CONTROL AND COMPUTER SCIENCES, vol.24, no.4, 1990, NEW YORK US pages 56 - 64, XP000200093 A.M. DISMAN ET AL. 'DESIGN PRINCIPLES AND PROPERTIES OF GENERATORS OF MAXIMUM LENGTH L-ARY SEQUENCES'
- VEHICULAR TECHNOLOGY SOCIETY 42ND VTS CONFERENCE FRONTIERS OF TECHNOLOGY, vol.1, 18 May 1992, DENVER, COLORADO, US pages 384 - 387, XP000339759 T. NAGAYASU ET AL. 'PERFORMANCE OF 16QAM WITH DECISION FEEDBACK EQUALIZER USING INTERPOLATION FOR LAND MOBILE COMMUNICATIONS'

## Description

The present invention relates to a digital recording apparatus for recording digital data such as a digital audio signal or a digital video signal.

A variety of digital audio taperecorders and video taperecorders (referred to as digital VTRs) have been developed for recording digitized audio and video signals without deteriorating data quality.

One of the known digital VTRs exploits the D1 system as explained, for example, in "Electrical system design for the SMPTE D-1 DTTR" by Jurgen K.R. Heitmann, SMPTE Journal, December 1986, pp.1215-1221. Another is known as a D2 DVTR; an example is depicted in "Design consideration for the D-2 NTSC composite DVTR" by Richard Brush, SMPTE Journal, March 1988, pp.182-193.

Each of these digital VTRs produces on a magnetic recording medium a row of helical tracks which are arranged diagonally of the recording medium for storage of recording data. In playback, since the helical tracks are scanned at intervals, reproduction of a clock signal synchronized with the recorded data in the recording tracks has to be started at the beginning of each track scan. For ease of the reproduction of the clock signal, a preamble is provided at the beginning end of each helical track. The preamble is followed by audio or video data of the recorded area in the helical track. The preamble contains a run-up signal allocated to a given length for ease of the reproduction of the clock signal. The run-up signal is a set of binary bits 0 and 1, in which a specific binary bit pattern is repeated cyclically like, for example, 00110011... By using the run-up signal detected from the preamble, a clock signal synchronized with the recorded data will be reproduced with much ease before retrieval of the main audio or video recorded data in the helical track.

In decoding a digital playback signal reproduced from the recording medium, it is desired to establish a stable operational state using an automatic gain controller for automatically maintaining a constant amplitude of the playback signal and an automatic equalizer for correcting a change in the frequency characteristic caused by mechanical inconsistency or characteristic variations of the recording medium or reproducing head. Such automatic gain control and equalizing operations are also required to be stable like the reproduction of the clock signal from the start of scanning each recording track to reproduce the recorded data.

The recorded data is generally a signal having a uniform spectrum over a wide range of frequencies. Thus, the automatic gain controller has to maintain a constant amplitude of the playback signal over such a wide frequency range and the automatic equalizer has to optimize the frequency characteristics throughout the wide frequency range.

However, the run-up signal contained in the preamble is a periodic stream of binary digits 0 and 1 such as 00110011..., which has a single spectrum line in this case, at a frequency which is 1/4 the recording data rate). More particularly, the run-up signal allows only one particular frequency to be observed in the playback level. Thus, the automatic gain control operation using the run-up signal is effected only to the playback signal at the particular frequency and an average amplitude of the playback signals at the other frequencies in the wide range will hardly be maintained constant. Also, the automatic equalizing operation may fail to optimize the characteristics at all the frequencies throughout the wide frequency range. As the result, the automatic gain control and equalizing operations will remain unstable when reproduction of the recorded data starts, causing faulty decoding of the data.

A technique for easing the equalizing operation during playback is disclosed in Japanese Patent Publication No.62-52764(1987) in which two repetitive signals whose wavelengths are respectively identical to the longest and shortest wavelengths of the data signal are respectively recorded in front and rear halves of a postamble which is allocated to the rear end of each helical recording track. However, there are still two problems. One problem is that the postamble is located after the data signal recording area of each recording track. In operation of the common digital VTR, since adjacent recording tracks are scanned by different playback heads, the automatic equalizer has to be adjusted in operational characteristics to each recording track. The adjustment of the automatic equalizer to the data in a recording track cannot be effected by the repetitive signals retrieved from the postamble of the track because the data is recorded in front of the postamble. The other problem that the repetitive signals in the postamble have two frequency components corresponding to the longest and shortest wavelengths of the data signal. It is never favorable to optimize the equalizing characteristics throughout a wide range of frequencies using the two frequency components of the repetitive signals.

A technique for performing synchronous bit detection and clock signal synchronisation is disclosed in EP-A-0337 702, which makes use of Pseudo-Random Binary sequences (hereinafter referred to as maximum-length or M-sequences). The above prior art is reflected by the preamble of claims 1,2,4,5.

A code-error correcting device which comprises a circuit for generating M-sequences computes the EXCLUSIVE OR (XOR) of digital information and the M-sequence in order to encode the digital information, and then supplies the result of the EXCLUSIVE OR operation to a digital modulator as an input thereof. An initial value used for generating the M-sequence is set to be the address information or data block information related to the digital information, when the digital information is recorded in a suitable recording system.

It is a characteristic of the result of an EXCLUSIVE OR operation between an M-sequence and original data information in that the original digital signals are modified in such a manner as to include an inversion or transition between 0 and 1 even if the original digital signals include a quantity in which every digit is 0 or of which every digit is 1. In other words the digital information is encoded to include a large number of"turning points" (0 to 1 transitions, or vice versa) and these turning points are used within the invention of EP-A-0337702 to provide for clock signal synchronisation.

This method has the obvious disadvantage in that the actual digital information is itselfbeing used to generate the synchronisation required to read the data accurately, and hence bit errors may occur or data may be lost while the synchronisation is being achieved.

According to one aspect of the present invention there is provided a digital data recording apparatus comprising:
M-sequence signal generating means for producing an M-sequence signal; and
signal converting means for converting an input data to a recording data sequence signal,
characterized by further comprising:
data block producing means for time-serially arranging the M-sequence signal and the recording data sequence signal in this order to obtain a recording data block; and
recording means for recording the recording data block on a recording medium.

Also, in another aspect of the present invention there is provided a digital data recording apparatus comprising:
M-sequence signal generating means for producing an M-sequence signal; and
signal converting means for converting an input data to recording data sequence signal,
characterized by further comprising:
periodic signal generating means for producing a periodic signal in which a predetermined binary bit pattern occurs cyclically;
data block producing means for time-serially arranging the periodic signal, the M-sequence signal and the recording data sequence signal in this order to obtain a recording data block; and
recording means for recording the recording data block on a recording medium.

According to yet another aspect of the present invention there is provided a digital data recording apparatus comprising:
M-sequence signal generating means for producing an M-sequence signal;
video signal converting means for converting an input video data to a recording video data sequence signal; and
audio signal converting means for converting an input audio data to a recording audio data sequence signal,
characterized by further comprising:
data block producing means for time-serially arranging the M-sequence signal and the recording video data sequence signal in this order to obtain a video recording data block and for time-serially arranging the M-sequence signal and the recording audio data sequence signal in this order to obtain an audio recording data block; and
recording means for recording the video and audio recording data blocks on a recording medium.

According to a still further aspect of the present invention there is provided a digital data recording apparatus comprising:
M-sequence signal generating means for producing an M-sequence signal;
video signal converting means for converting an input video data to a recording video data sequence signal; and
audio signal converting means for converting an input audio data to a recording audio data sequence signal,
characterized by further comprising:
periodic signal generating means for producing a periodic signal in which a predetermined binary bit pattern occurs cyclically;
data block producing means for time-serially arranging the periodic signal, the M-sequence signal and the recording video data sequence signal in this order to obtain a video recording data block and for time-serially arranging the periodic signal, the M-sequence signal and the recording audio data sequence signal in this order to obtain an audio recording data block; and
recording means for recording the video and audio recording data blocks on a recording medium.

It is an advantage of the present invention in that by providing an improved digital recording apparatus for recording a digital data a gain control operation, which starts upon scanning of a target recording track in playback, completes a gain control to attain a constant amplitude of a playback signal throughout a wide range of frequencies before retrieval of the digital data in the recording track.

It is another advantage of the present invention in that by providing an improved digital recording apparatus for recording a digital data, an equalizing operation, which starts upon scanning of a target recording track in playback, completes optimization of the frequency characteristics of a playback signal throughout a wide range of frequencies before retrieval of the digital data in the recording track.

It is a further advantage of the present invention in that by providing an improved digital recording apparatus for recording digital data, a clock signal synchronisation operation, which starts upon scanning of a target recording track, completes before retrieval of the digital data in the recording track, thus allowing for synchronous bit detection of each bit of the digital data in the recording track.

In recording, the M-sequence signal having a uniform spectrum throughout a wide frequency range is recorded in an area before the main recording data sequence signal recording area on the-recording medium. In playback, the M-sequence signal is first reproduced to perform the gain control and the equalizing operation and establish a stable condition before starting reproduction of the main recording cats sequence signal.

Also, the periodic signal recorded in front of the M-sequence signal is used in playback to have a stable state of clock pulses before reproduction of the M-sequence signal, whereby the time required for establishing a stable state of the automatic control will be minimized.
Fig. 1 is a schematic block diagram showing a digital recording apparatus as a first embodiment of the present invention;
Fig. 2 is a diagram of an M-sequence signal;
Fig. 3 is a timing chart for explaining an operation of the first embodiment,
Fig. 4 is a schematic view of a rotary cylinder used in the first embodiment as well as in other embodiments;
Fig. 5 is a view showing a pattern of recording tracks on a magnetic recording tape according to the embodiments;
Fig. 6 is a structural view of a recording track of the first embodiment;
Fig. 7 is a spectrum diagram of the M-sequence signal;
Fig. 8 is a schematic block diagram showing another digital recording apparatus as a second embodiment of the present invention;
Fig. 9 is a timing chart for explaining an operation of the second embodiment;
Fig. 10 is a structural view of a recording track of the second embodiment;
Fig. 11 is a schematic block diagram showing still another digital recording apparatus as a third embodiment of the present invention;
Fig. 12 is a timing chart for explaining an operation of the third embodiment; and
Fig. 13 is a structural view of a recording track of the third embodiment.

A first embodiment of the present invention will be described in the form of a digital recording apparatus.

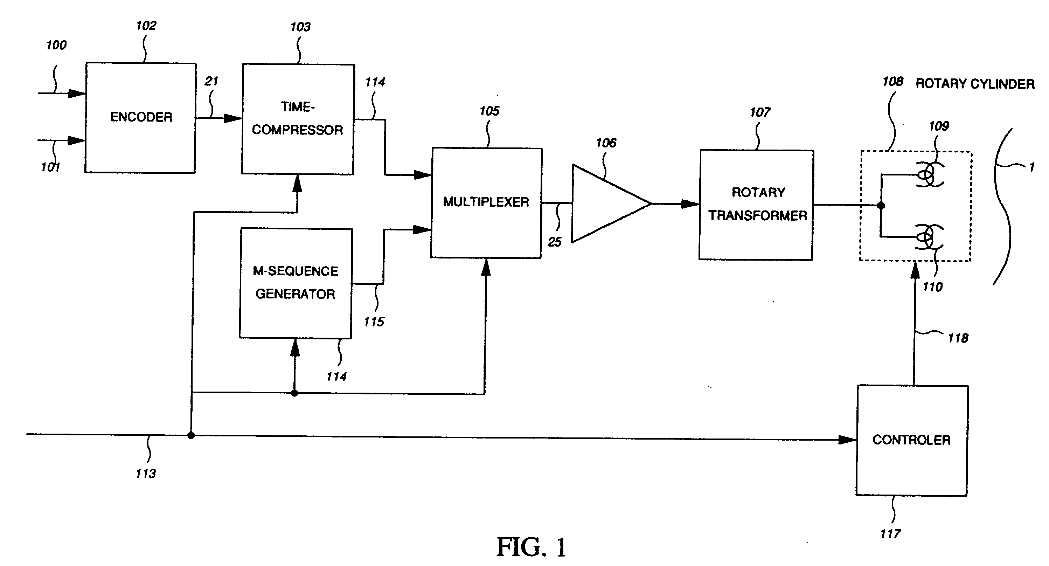

Fig. 1 is a schematic block diagram of the digital recording apparatus of the first embodiment which is more specifically a digital VTR for recording digital audio and video signals on helically arranged recording tracks on a magnetic tape.

Referring to Fig. 1, a digitized video signal is denoted by 100 and a digitized audio signal is denoted by 101. The video signal 100 and the audio signal 101 are supplied to an encoder 102 where they are mixed together and added with error correction codes as well as sync signals and ID signals to produce a data signal 21. The data signal 21 is transferred to a time-compressor 103 to be time-compressed. A time-compressed data signal 114 is then fed to a multiplexer 105.

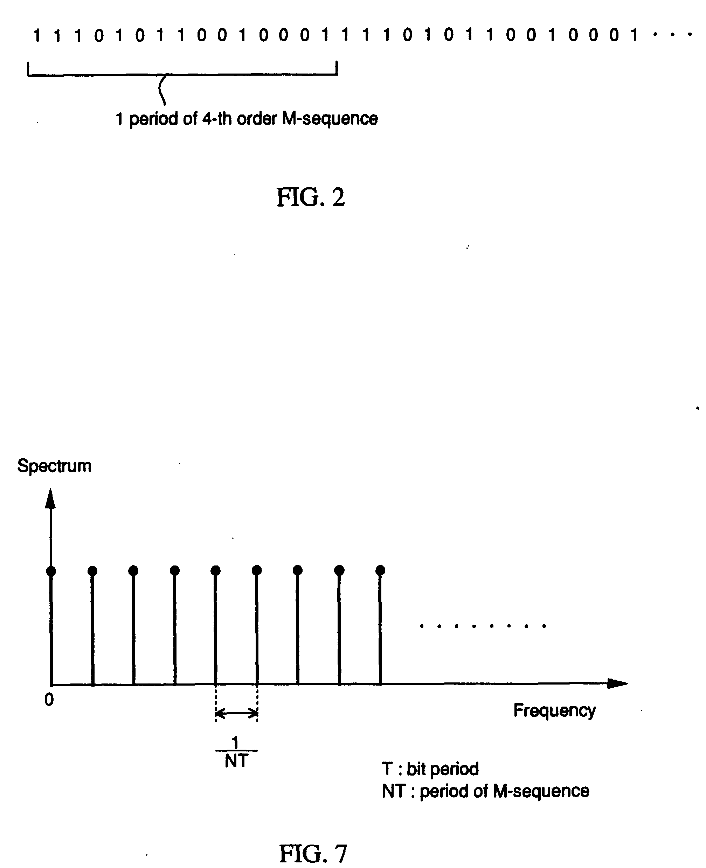

Meanwhile, an M-sequence generator 114 produces an M-sequence signal 115 which is also called as a maximum-length code; for more details, refer to "Basic computer lecture 18, code theory" by Hiroshi Miyagawa et al, Shokodo Publishing, October 5, 1973, pp.128-129. The M-sequence signal is a periodic bit train with a cyclic period of 2^{k}-1 bits produced by a k-th order primitive polynomial where each period contains binary bits (0 and 1) arranged at random. For example, an M-sequence signal produced by a 4th-order primitive polynomial x⁴+x+1 becomes a sequence of cyclically occurring 15-bit periodic data as shown in Fig. 2. This M-sequence signal 115 is also fed to the multiplexer 105.

The multiplexer 105 multiplexes the M-sequence signal and the time-compressed data signal 114 to produce a series of data blocks, or a recording data, 25 each block being composed of an M-sequence signal and a time-compressed data signal.

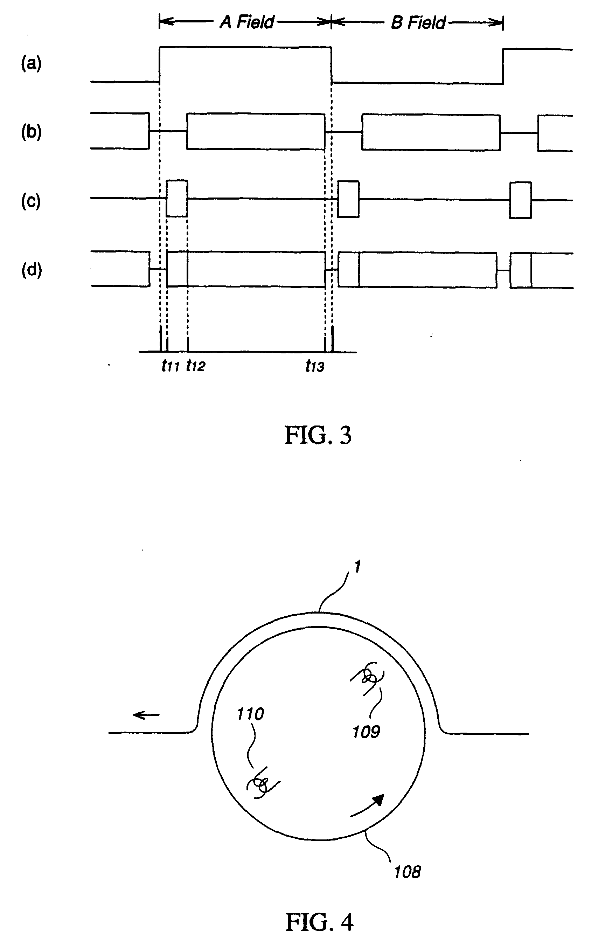

The time-compressor 103, the M-sequence generator 104, and the multiplexer 105 are responsive to a timing signal 113 which is synchronized with the field period of the video signal 100 for controlling timings of the compressed data signal 114, the M-sequence signal 115 and the recording data 25. The timings are as shown in the timing chart of Fig. 3.

The timing signal 113 synchronous with the field period of the video signal 100 is denoted by (a) in Fig. 3 in which a high level period corresponds to an A field, one of a pair of fields of the video signal, and a low level period corresponds to the other field B. Signal (b) in Fig. 3 is the compressed data signal 114 produced in the time-compressor 103 by compressing the data of each field of the data signal 21. The compressed field data of the data signal 21 is outputted from time t₁₂ to time t₁₃ of the field period as shown in Fig. 3. Signal (c) in Fig. 3 is the M-sequence signal 115 which is outputted from time t₁₁ to time t₁₂ of the field period. Data (d) in Fig. 3 is the resultant recording data 25 in which the M-sequence signal 115 ((c) in Fig. 3) and the time-compressed field data signal 114 ((b) in Fig. 3) occur alternately. In other words, the M-sequence signal 115 is outputted from t₁₁ to t₁₂ in each field and the time-compressed data signal 114 is outputted from t₁₂ to t₁₃. Each field of the recording data 25 consists mainly of a data block containing the serially occurring M-sequence signal and time-compressed field data signal.

Referring back to Fig. 1, the recording data 25 is amplified with a record amplifier 106 and transferred via a rotary transformer 107 to a couple of record heads 109 and 110. The secondary coil of the rotary transformer 107 and the two record heads 109, 110 are mounted on a rotary cylinder 108 which rotates for recording helical tracks onto a magnetic tape 1. A controller 117 is also provided responsive to the timing signal 113 for generating a control signal 118 so that the rotary cylinder 108 performs one full rotation for a frame (two fields) of the video image.

Fig. 4 is a schematic top view of the rotary cylinder 108 having the two record heads 109 and 110 arranged 180° apart from each other. The magnetic tape 1 runs in the direction of the arrow mark while being wound in a slant direction on the rotary cylinder 108 over an angle of 180°. As described, the rotation of the rotary cylinder 108 is controlled by the control signal 118 to perform one rotation per video frame. More particularly, the magnetic recording tape 1 comes in contact with the record head 109 in the A field period and with the record head 110 in the B field period. As the result, a row of helical recording tracks of field data is formed on the magnetic tape 1.

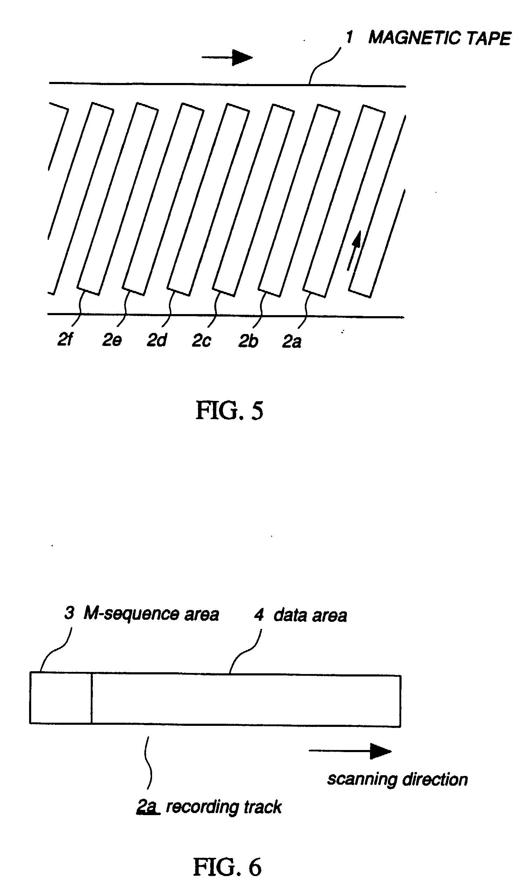

This row of the helical recording tracks on the magnetic recording tape 1 produced by the digital VTR of the first embodiment is illustrated in Fig. 5 showing a specific recording pattern. As the magnetic recording tape 1 runs from left to right in Fig. 5, the helical tracks are recorded from 2a to 2b, ...2f. The record head scans its corresponding track from the lower to upper direction in Fig. 5.

Fig. 6 is an enlarged view of the helical recording track 2a which has been recorded with the record head scanning in the left to right direction. In playback, the recording track 2a is scanned in the same, left to right direction. The recording track 2a has an M-sequence area 3 having recorded therein the M-sequence signal and a data area 4 having recorded therein the audio and/or video data.

As previously described, it is desired for playback of the digital VTR to provide a stable operational state using an automatic gain controller for automatically maintaining a constant amplitude of the playback signal and an automatic equalizer for correcting a change in the frequency characteristic caused by mechanical inconsistency or characteristic variation of the recording tape or the head. The digital data signal recorded in the data area 4 of the recording track 2a has a uniform large spectrum with a wide range of frequencies. For reproducing the data signal, the automatic gain controller has to maintain a constant amplitude of the playback signal throughout the wide frequency range. Also, the automatic equalizer is required to optimize the frequency characteristics of the playback signal throughout the wide frequency range. In addition, the digital VTR may allow each recording track to be scanned by different heads in the recording and/or the playback. It is necessary for the gain control and equalizing operation for each helical recording track to start with a start of scanning the track in order to establish a stable state before reproduction of data from the data area 4.

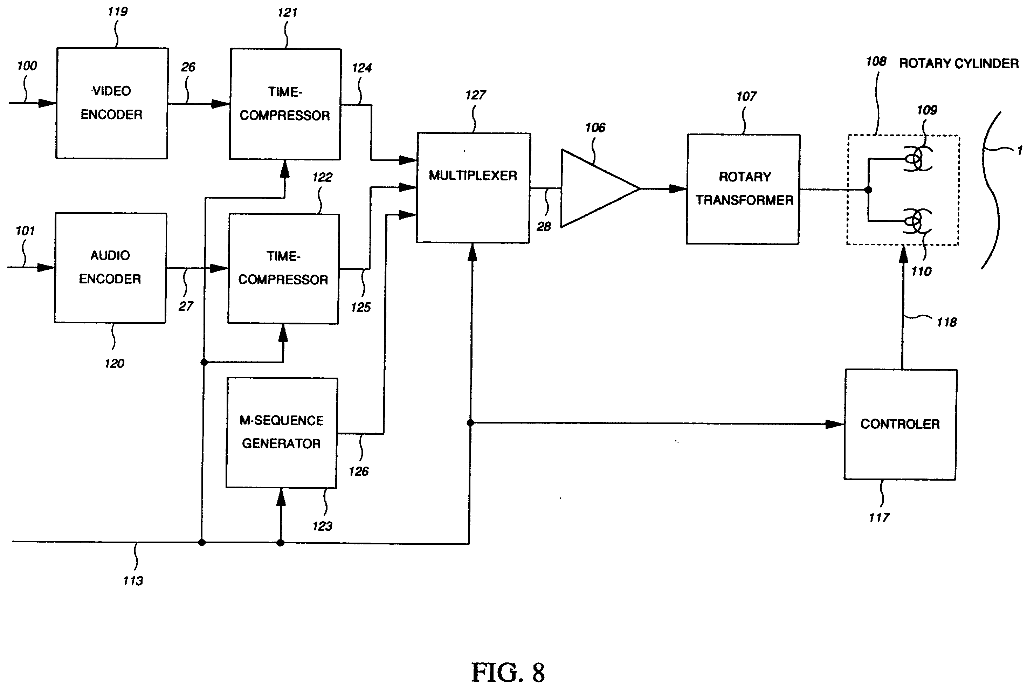

The spectrum of the M-sequence signal recorded in the M-sequence area 3 of the recording track is as shown in Fig. 7. If the bit period is T and the period of the M-sequence is N·T, the spectrum lines which are the same in level are distributed at equal intervals of 1/NT. Accordingly, the M-sequence signal provides a uniform spectrum throughout the wide frequency range up to the bit rate of the recording data. As the data block consisting mainly of the M-sequence signal and the main video and/or audio data signal is assigned to each recording track, as shown in Fig. 6, in the first embodiment of the present invention, the playback signal from the M-sequence area 3 is used to perform the required gain and equalizing control in the automatic gain controller and the automatic equalizer, thus producing a stable state throughout the wide frequency range of the playback signal before starting reproduction of data from the data area 4.

A second embodiment of the present invention will now be described in the form of a digital VTR for recording a digital video signal and a digital audio signal onto recording tracks arranged helically on a magnetic tape with higher accuracy.

Fig. 8 is a schematic block diagram of the digital VTR of the second embodiment where the same components as those of the first embodiment of Fig. 1 are denoted by the same numerals.

As shown, a digitized video signal 100 is combined with error correction codes, sync signals and ID signals in a video encoder 119 to become a video data signal 26. The video data signal 26 is fed to a time-compressor 121 and time-compressed. A resultant time-compressed video data signal 124 is transmitted to a multiplexer 127. Similarly, a digitized audio signal 101 is combined with error correction codes, sync signals and ID signals in an audio encoder 120 to become an audio data signal 27. The audio data signal 27 is then fed to a time-compressor 122 and time-compressed. A resultant time-compressed audio data signal 125 is also transmitted to the multiplexer 127. Meanwhile, an M-sequence generator 123 produces an M-sequence signal 126 which is also fed to the multiplexer 127. The multiplexer 127 multiplexes the three signals 124, 125 and 126 to produce a recording data signal 28.

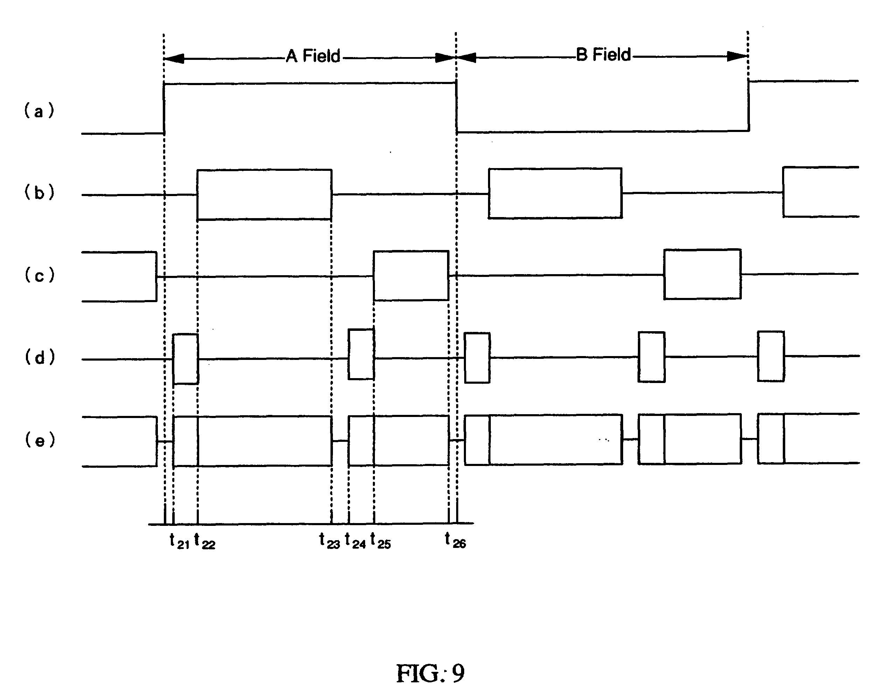

The two time-compressors 121 and 122, the M-sequence generator 123 and the multiplexer 127 are supplied with a timing signal 113 which is synchronous with the field timing of the video signal 100. The timing signal 113 determines the timings of the three signals 124, 125 and 126 and the recording data signal 28 as shown in a timing chart of Fig. 9.

In Fig. 9, signal (a) is the timing signal 113 synchronous with the field timing of the video signal 100. A high level period of the timing signal 113 corresponds to one A field which is of the two interlaced fields of the video signal and a low level period corresponds to B field, or the other field. Signal (b) is the compressed video data signal 124 produced by the time-compressor 121 compressing the data of each field of the video data signal 26. The compressed field data of the video data signal 124 is outputted from time t₂₂ to time t₂₃ of the field period, as shown in Fig. 9. Signal (c) is the compressed audio data signal 125 produced by time-compressing each field data of the audio data signal 27 with the time-compressor 122. The time-compressed audio data signal 125 is outputted from time t₂₅ to time t₂₆ of the field period. Signal (d) is the M-sequence signal 126 which is outputted from time t₂₁ to time t₂₂ and from time t₂₄ to time t₂₅ of the field period. Signal (e) is the resultant recording data signal 28 produced by multiplexing the above three signals 124, 125 and 126. As understood, each field period of the recording data signal 28 contains two data blocks: one block containing an M-sequence component and a video field data and the other block containing an M-sequence component and an audio field data.

The arrangement and its operation for recording the recording data signal 28 onto a magnetic tape 1 are identical to those of the first embodiment and will no longer be explained.

The resultant pattern of helical recording tracks on the magnetic tape 1 is also similar to that of the first embodiment shown in Fig. 5, except that the data allocation in each recording track 2a is differentiated from that of the first embodiment.

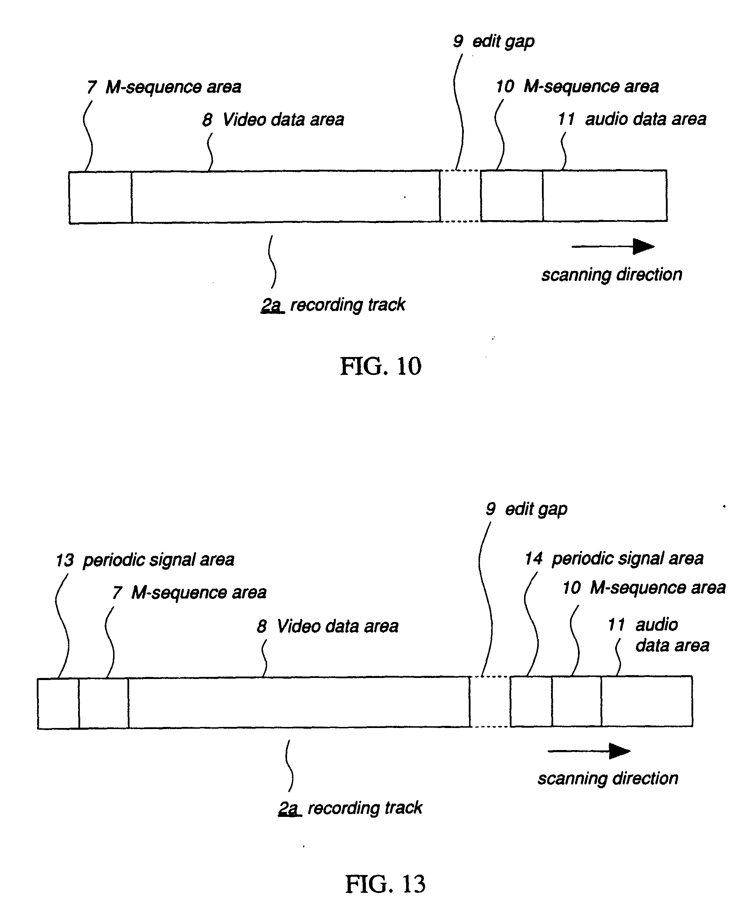

Fig. 10 shows one of the recording tracks 2a where data has been recorded in the direction from left to right with a record head and will also be scanned in the left to right direction for reproduction. More specifically, the recording track 2a of the second embodiment comprises, from left to right in Fig. 10, an M-sequence area 7 having recorded therein the M-sequence component, a video data area 8 having recorded therein the video field data, an edit gap 9 having no data recorded therein, another M-sequence area 10, and an audio data area 11 having recorded therein the audio field data.

The edit gap 9 of the second embodiment is inserted between the first data block for the video data area 8 and the second data block for the audio data area 11 in order to allow edit action of each of the video and audio data to be carried out independently of the other. The edit gap 9 can offer a margin if data replacement in the video data area 8 exceeds the record end limit or if data replacement in the audio data area 11 exceeds the record start limit. The signal in the M-sequence area 7 is also replaced when the data of the video data area 8 is changed. Also, the M-sequence area 10 and the audio data area 11 are replaced at a time. Accordingly, data in the video data area 8 and the audio data area 11 which are different from each other in record characteristics will successfully be reproduced with the automatic gain controller or equalizer. The video data in the video data area 8 is automatically optimized using the M-sequence signal retrieved from the M-sequence area 7 and the audio data in the audio data area 10 is automatically optimized using the M-sequence signal retrieved from the M-sequence area 11.

As set forth above, the video data and a M-sequence signal are paired as the first data block while the audio data and another M-sequence signal are paired as the second data block. Even when the two data blocks are different from each other in the record or other characteristics, data in each data block can be reproduced with an optimum characteristic using the M-sequence signal contained therein.

Although each recording track of the second embodiment contains two data blocks, it may carry three or more data blocks when the audio data is divided into multiple channels.

A third embodiment of the present invention will be described in the form of another digital VTR for recording a digital video signal and a digital audio signal onto recording tracks arranged helically on a magnetic tape.

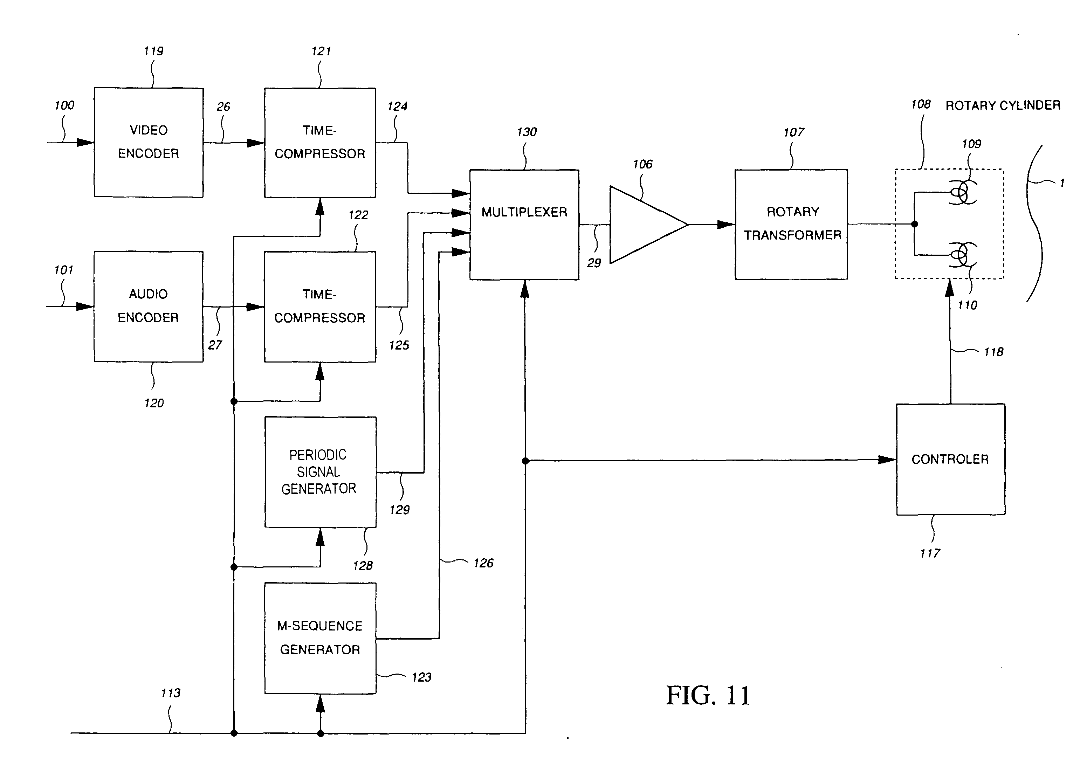

Fig. 11 is a schematic block diagram of the digital VTR of the third embodiment where the same components as those of the second embodiment of Fig. 8 are denoted by the same numerals.

As shown, a digitized video signal 100 is combined with error correction codes, sync signals and ID signals in a video encoder 119 to become a video data signal 26. The video data signal 26 is fed to a time-compressor 121 to be subjected to time-compression. A resultant time-compressed video data signal 124 is transmitted to a multiplexer 130. Similarly, a digitized audio signal 101 is combined with error correction codes, sync signals and ID signals in an audio encoder 120 to become an audio data signal 27. The audio data signal 27 is then time-compressed in a time-compressor 122 . A resultant time-compressed audio data signal 125 is also transmitted to the multiplexer 130. Meanwhile, a periodic signal 129 in which a pattern of 0 and 1 repeats at predetermined cycles, e.g. 010101..., is produced by a periodic signal generator 128 and supplied to the multiplexer 130. An M-sequence generator 123 produces an M-sequence signal 126 which is also fed to the multiplexer 130. The multiplexer 130 multiplexes the four input signals 124, 125, 126 and 129 to produce a recording data signal 29.

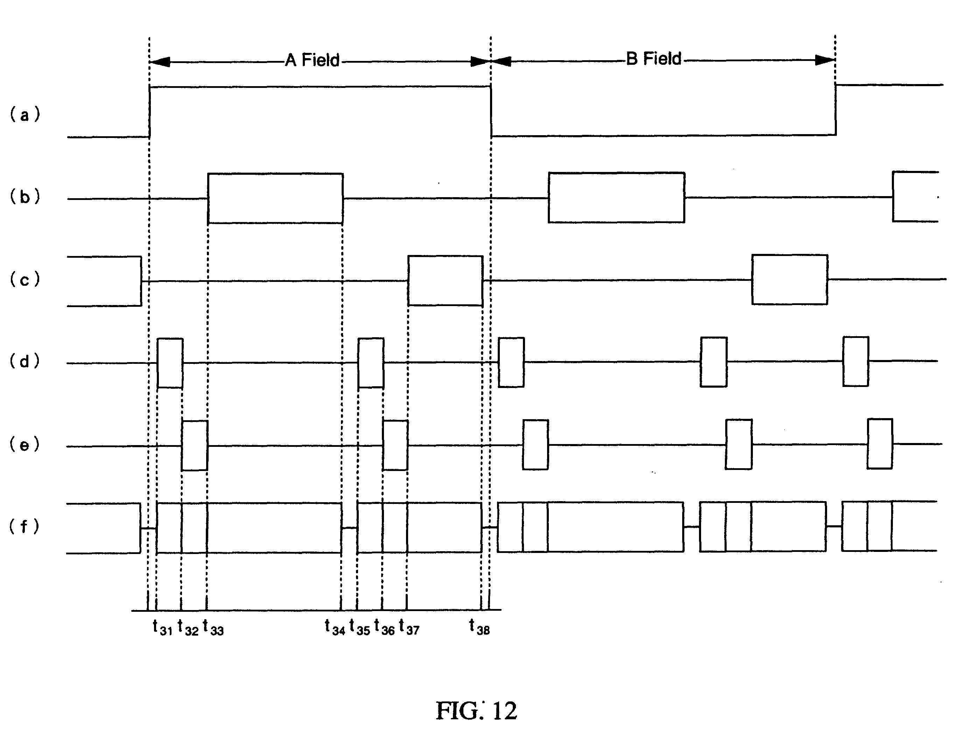

The two time-compressors 121 and 122, the periodic signal generator 128, the M-sequence generator 123 and the multiplexer 130 are supplied with a timing signal 113 which is synchronous with the field timing of the video signal 100. The timing signal 113 determines the timings of the two data signals 124 and 125, the periodic signal 129, the M-sequence signal 126, and the recording data signal 29, as shown in a timing chart of Fig. 12.

In Fig. 12, signal (a) is the timing signal 113 synchronous with the field timing of the video signal 100. A high level period of the timing signal 113 corresponds to the A field of the two interlaced fields of the video signal and a low level period corresponds to the other, B field . Signal (b) is the compressed video data signal 124 produced by the time-compressor 121 compressing the data of each field of the video data signal 26. The compressed field data of the video data signal 124 is outputted from time t₃₃ to time t₃₄ of the field period, as shown in Fig. 12. Signal (c) is the compressed audio data signal 125 produced by time- compressing each field data of the audio data signal 27 with the time-compressor 122. The time-compressed audio data signal 125 is outputted from time t₃₇ to time t₃₈ of the field period. Signal (d) is the periodic signal 129 which is outputted from time t₃₁ to time t₃₂ and from time t₃₅ to time t₃₆ of the field period. Signal (e) is the M-sequence signal 126 which is outputted from time t₃₂ to time t₃₃ and from time t₃₆ to time t₃₇ of the field period. Signal (f) is the resultant recording data signal 29 produced by multiplexing the above two data signals 124 and 125, the periodic signal 129, and the M-sequence signal 126. Each field period of the recording data signal 29 comprises two data blocks: one data block containing a periodic signal, an M-sequence signal and a video field data, and the other data block containing a periodic signal, an M-sequence signal and an audio field data.

The arrangement and its operation for recording the recording data signal 29 onto a magnetic tape 1 are identical to those of the first or second embodiment and will no more be explained.

The resultant pattern of helical recording tracks on the magnetic tape 1 is also similar to that of the first embodiment illustrated in Fig. 5, except that the data allocation in each recording track is differed from that of the first or second embodiment. Fig. 13 is an enlarged view of the recording track 2a of the third embodiment, in which the same items as those of the second embodiment are denoted by the same numerals. As understood, the pattern in Fig. 13 is different from the pattern in Fig. 10 in that two periodic signal areas 13 and 14 are provided before the M-sequence areas 7 and 10, respectively.

According to the third embodiment, the video data area 8 is recorded together with the periodic signal area 13 and M-sequence area 7 while the audio data area 11 is recorded together with the periodic signal area 14 and M-sequence area 10. Each periodic signal area carries the periodic signal in which a pattern of 0 and 1 is repeated at predetermined cycles. The periodic signal is used for reproducing a clock signal for synchronism of the data signal before retrieval of signal from the M-sequence area 3 or 10. Generally, the automatic equalizing action during playback requires a clock signal synchronized with the recorded signal. According to the second embodiment, the clock signal is reproduced using the M-sequence signal recorded in the M-sequence area 3 or 10 and thus takes some time before it becomes ready for use. This will cause the automatic equalizing action to be delayed to become a stable state. The third embodiment can establish the ready state of the clock signal before the scanning of the M-sequence area 3 or 10 and will reduce the time required to have a stable state of the automatic equalizing action.

Although each recording track of the third embodiment contains two data blocks, it may carry three or more data blocks when the audio data is divided into multiple channels.

The digital video and audio signals are recorded onto helical recording tracks of a magnetic recording tape in the first, second and third embodiments. The present invention is not limited to that configuration and the digital information to be recorded may be other than the video and audio signals. Also, the recording medium may be a magnetic disk or other applicable materials.

## Claims

1. A digital data recording apparatus comprising:
M-sequence signal generating means (114) for producing an M-sequence signal; and
signal converting means (102, 103) for converting an input data to a recording data sequence signal,
characterized by further comprising:
data block producing means (105) for time-serially arranging the M-sequence signal and the recording data sequence signal in this order to obtain a recording data block; and
recording means (106, 107, 108, 117) for recording the recording data block on a recording medium.

2. A digital data recording apparatus comprising:
M-sequence signal generating means (123) for producing an M-sequence signal; and
signal converting means (119, 120, 121, 122) for converting an input data to recording data sequence signal,
characterized by further comprising:
periodic signal generating means (128) for producing a periodic signal in which a predetermined binary bit pattern occurs cyclically;
data block producing means ( 130) for time-serially arranging the periodic signal, the M-sequence signal and the recording data sequence signal in this order to obtain a recording data block; and
recording means (106, 107, 108, 117) for recording the recording data block on a recording medium.

3. A digital data recording apparatus according to claim 1 or 2, wherein said recording medium is a magnetic recording tape (1), and wherein said recording means (108) includes a magnetic head (109, 110) for helically scanning the magnetic recording tape to form thereon plural helical recording tracks such that at least one said recording data block is recorded in each of said plural helical recording tracks.

4. A digital data recording apparatus comprising:
M-sequence signal generating means (123) for producing an M-sequence signal;
video signal converting means (119, 121) for converting an input video data to a recording video data sequence signal; and
audio signal converting means ( 120, 122) for converting an input audio data to a recording audio data sequence signal,
characterized by further comprising:
data block producing means (127) for time-serially arranging the M-sequence signal and the recording video data sequence signal in this order to obtain a video recording data block and for time-serially arranging the M-sequence signal and the recording audio data sequence signal in this order to obtain an audio recording data block; and
recording means (106, 107, 108, 117) for recording the video and audio recording data blocks on a recording medium.

5. A digital data recording apparatus comprising:
M-sequence signal generating means (123) for producing an M-sequence signal;
video signal converting means (119, 121) for converting an input video data to a recording video data sequence signal; and
audio signal converting means (120, 122) for converting an input audio data to a recording audio data sequence signal,
characterized by further comprising:
periodic signal generating means (128) for producing a periodic signal in which a predetermined binary bit pattern occurs cyclically;
data block producing means (130) for time-serially arranging the periodic signal, the M-sequence signal and the recording video data sequence signal in this order to obtain a video recording data block and for time-serially arranging the periodic signal, the M-sequence signal and the recording audio data sequence signal in this order to obtain an audio recording data block; and
recording means (106, 107, 108, 117) for recording the video and audio recording data blocks on a recording medium.

6. A digital data recording apparatus according to claim 4 or 5, wherein said recording medium is a magnetic recording tape ( 1), and wherein said recording means (108) includes a magnetic head ( 1 09, 1 10) for helically scanning the magnetic recording tape to form thereon plural helical recording tracks such that the video and audio recording data blocks are recorded in each of said plural helical recording tracks.

## Patentansprüche

1. Digitale Datenaufzeichnungsvorrichtung, die umfaßt:
eine M-Sequenz-Signal-Erzeugungseinrichtung (114), die ein M-Sequenz-Signal erzeugt; und
eine Signalumwandlungseinrichtung (102, 103), die Eingangsdaten in ein Aufzeichnungsdatensequenz-Signal umwandelt,
**dadurch gekennzeichnet,** daß sie des weiteren umfaßt:
eine Datenblock-Herstellungseinrichtung (105), die das M-Sequenz-Signal und das Aufzeichnungsdatensequenz-Signal in dieser Reihenfolge zeitlich seriell anordnet, um einen Aufzeichnungsdatenblock zu erzeugen; und
eine Aufzeichnungseinrichtung (106, 107, 108, 117), die den Aufzeichnungsdatenblock auf einem Aufzeichnungsmedium aufzeichnet.

2. Digitale Datenaufzeichnungsvorrichtung, die umfaßt:
eine M-Sequenz-Signal-Erzeugungseinrichtung (123), die ein M-Sequenz-Signal erzeugt; und
eine Signalumwandlungseinrichtung (119, 120, 121, 122), die Eingangsdaten in ein Aufzeichnungsdatensequenz-Signal umwandelt,
**dadurch gekennzeichnet,** daß sie weiterhin umfaßt:
eine Erzeugungseinrichtung (128) für periodische Signale, die ein periodisches Signal herstellt, in dem ein vorgegebenes binäres Bitmuster zyklisch auftritt;
eine Datenblock-Herstellungseinrichtung (130), die das periodische Signal, das M-Sequenz-Signal und das Aufzeichnungsdatensequenz-Signal in dieser Reihenfolge zeitlich seriell anordnet, um einen Aufzeichnungsdatenblock zu erzeugen; und
eine Aufzeichnungseinrichtung (106, 107, 108, 177), die den Aufzeichnungsdatenblock auf einem Aufzeichnungsmedium aufzeichnet.

3. Digitale Datenaufzeichnungsvorrichtung nach Anspruch 1 oder 2, wobei das Aufzeichnungsmedium ein Magnetaufzeichnungsband (1) ist, und wobei die Aufzeichnungseinrichtung (108) einen Magnetkopf (109, 110) enthält, der Spiralabtastung des Magnetaufzeichnungsbandes ausführt, um darauf mehrere Spiralaufzeichnungsspuren herzustellen, so daß wenigstens ein Aufzeichnungsdatenblock auf jeder der mehreren Spiralaufzeichnungsspuren aufgezeichnet wird.

4. Digitale Datenaufzeichnungsvorrichtung, die umfaßt:
eine M-Sequenz-Signal-Erzeugungseinrichtung (123), die ein M-Sequenz-Signal erzeugt;
eine Videosignal-Umwandlungseinrichtung (119, 121), die Eingangsvideodaten in ein Aufzeichnungsvideodatensequenz-Signal umwandelt; und
eine Audiosignal-Umwandlungseinrichtung (120, 122), die Eingangsaudiodaten in ein Aufzeichnungsaudiodatensequenz-Signal umwandelt,
**dadurch gekennzeichnet,** daß sie weiterhin umfaßt:
eine Datenblock-Herstellungseinrichtung (127), die das M-Sequenz-Signal und das Aufzeichnungsvideodatensequenz-Signal in dieser Reihenfolge zeitlich seriell anordnet, um einen Videoaufzeichnungsdatenblock zu erzeugen, und das M-Sequenz-Signal und das Aufzeichnungsaudiodatensequenz-Signal in dieser Reihenfolge zeitlich seriell anordnet, um einen Audioaufzeichnungsdatenblock zu erzeugen; und
eine Aufzeichnungseinrichtung (106, 107, 108, 117) zum Aufzeichnen der Videound Audioaufzeichnungsdatenblöcke auf einem Aufzeichnungsmedium.

5. Digitale Datenaufzeichnungsvorrichtung, die umfaßt:
eine M-Sequenz-Signal-Erzeugungseinrichtung (123), die ein M-Sequenz-Signal erzeugt;
eine Videosignal-Umwandlungseinrichtung (118, 121), die Eingangsvideodaten in ein Aufzeichnungsvideodatensequenz-Signal umwandelt; und
eine Audiosignal-Umwandlungseinrichtung (120, 122), die Eingangsautiodaten in ein Aufzeichnungsaudiodatensequenz-Signal umwandelt,
**dadurch gekennzeichnet,** daß sie weiterhin umfaßt:
eine Erzeugungseinrichtung (128) für periodische Signale, die ein periodisches Signal herstellt, in dem ein vorgegebenes binäres Bitmuster zyklisch auftritt;
eine Datenblock-Herstellungseinrichtung (130), die das periodische Signal, das M-Sequenz-Signal und das Aufzeichnungsvideodatensequenz-Signal in dieser Reihenfolge zeitlich seriell anordnet, um einen Videoaufzeichnungsdatenblock zu erzeugen, und das periodische Signal, das M-Sequenz-Signal und das Aufzeichnungsaudiodatensequenz-Signal in dieser Reihenfolge zeitlich seriell anordnet, um einen Audioaufzeichnungsdatenblock zu erzeugen; und
eine Aufzeichnungseinrichtung (106, 107, 108, 117), die die Video- und Audioaufzeichnungsdatenblöcke auf einem Aufzeichnungsmedium aufzeichnet.

6. Digitale Datenaufzeichnungsvorrichtung nach Anspruch 4 oder 5, wobei das Aufzeichnungsmedium ein Magnetaufzeichnungsband (1) ist, und wobei die Aufzeichnungseinrichtung (108) einen Magnetkopf (109, 110) enthält, der Spiralabtastung des Magnetaufzeichnungsbandes ausführt, um darauf mehrere Spiralaufzeichnungsspuren herzustellen, so daß die Video- und Audioaufzeichnungsdatenblöcke auf jeder der mehreren Spiralaufzeichnungsspuren aufgezeichnet werden.

## Revendications

1. Appareil d'enregistrement de données numériques comprenant :
un moyen de génération de signal de séquence M (114) pour produire un signal de séquence M ; et
un moyen de conversion de signal (102, 103) pour convertir des données d'entrée selon un signal de séquence de données d'enregistrement,
caractérisé en ce qu'il comprend en outre :
un moyen de production de bloc de données (105) pour agencer en série temporelle le signal de séquence M et le signal de séquence de données d'enregistrement selon cet ordre afin d'obtenir un bloc de données d'enregistrement ; et
un moyen d'enregistrement (106, 107, 108, 117) pour enregistrer le bloc de données d'enregistrement sur un support d'enregistrement.

2. Appareil d'enregistrement de données numériques comprenant :
un moyen de génération de signal de séquence M (123) pour produire un signal de séquence M ; et
un moyen de conversion de signal (119, 120, 121, 122) pour convertir des données d'entrée selon un signal de séquence de données d'enregistrement,
caractérisé en ce qu'il comprend en outre :
un moyen de génération de signal périodique (128) pour produire un signal périodique dans lequel un motif de bits binaires prédéterminé survient de façon cyclique ;
un moyen de production de bloc de données (130) pour agencer en série temporelle le signal périodique, le signal de séquence M et le signal de séquence de données d'enregistrement selon cet ordre afin d'obtenir un bloc de données d'enregistrement ; et
un moyen d'enregistrement (106, 107, 108, 117) pour enregistrer le bloc de données d'enregistrement sur un support d'enregistrement.

3. Appareil d'enregistrement de données numériques selon la revendication 1 ou 2, dans lequel ledit support d'enregistrement est une bande d'enregistrement magnétique (1) et dans lequel ledit moyen d'enregistrement (108) inclut une tête magnétique (109, 110) pour balayer hélicoïdalement la bande d'enregistrement magnétique afin de former dessus plusieurs pistes d'enregistrement hélicoïdales de telle sorte qu'au moins un dit bloc de données d'enregistrement soit enregistré dans chacune desdites plusieurs pistes d'enregistrement hélicoïdales.

4. Appareil d'enregistrement de données numériques comprenant :
un moyen de génération de signal séquence M (123) pour produire un signal de séquence M ;
un moyen de conversion de signal vidéo (119, 121) pour convertir des données vidéo d'entrée selon un signal de séquence de données vidéo d'enregistrement ; et
un moyen de conversion de signal audio (120, 122) pour convertir des données audio d'entrée selon un signal de séquence de données audio d'enregistrement,
caractérisé en ce qu'il comprend en outre :
un moyen de production de bloc de données (127) pour agencer en série temporelle le signal de séquence M et le signal de séquence de données vidéo d'enregistrement selon cet ordre afin d'obtenir un bloc de données d'enregistrement vidéo et pour agencer en série temporelle le signal de séquence M et le signal de séquence de données audio d'enregistrement selon cet ordre afin d'obtenir un bloc de données d'enregistrement audio ; et
un moyen d'enregistrement (106, 107, 108, 117) pour enregistrer les blocs de données d'enregistrement vidéo et audio sur un support d'enregistrement.

5. Appareil d'enregistrement de données numériques comprenant :
un moyen de génération de signal de séquence M (123) pour produire un signal de séquence M ;
un moyen de conversion de signal vidéo (119, 121) pour convertir des données vidéo d'entrée selon un signal de séquence de données vidéo d'enregistrement ; et
un moyen de conversion de signal audio (120, 122) pour convertir des données audio d'entrée selon un signal de séquence de données audio d'enregistrement,
caractérisé en ce qu'il comprend en outre :
un moyen de génération de signal périodique (128) pour produire un signal périodique dans lequel un motif de bits binaires prédéterminé survient de façon cyclique ;
un moyen de production de bloc de données (130) pour agencer en série temporelle le signal périodique, le signal de séquence M et le signal de séquence de données vidéo d'enregistrement selon cet ordre afin d'obtenir un bloc de données d'enregistrement vidéo et pour agencer en série temporelle le signal périodique, le signal de séquence M et le signal de séquence de données audio d'enregistrement selon cet ordre afin d'obtenir un bloc de données d'enregistrement audio ; et
un moyen d'enregistrement (106, 107, 108, 117) pour enregistrer les blocs de données d'enregistrement vidéo et audio sur un support d'enregistrement.

6. Appareil d'enregistrement de données numériques selon la revendication 4 ou 5, dans lequel ledit support d'enregistrement est une bande d'enregistrement magnétique (1) et dans lequel ledit moyen d'enregistrement (108) inclut une tête magnétique (109, 110) pour balayer hélicoïdalement la bande d'enregistrement magnétique afin de former dessus plusieurs pistes d'enregistrement hélicoïdales de telle sorte que les blocs de données d'enregistrement vidéo et audio soient enregistrés dans chacune desdites plusieurs pistes d'enregistrement hélicoïdales.
